# DEMANDE DE BREVET EUROPEEN

(11) **EP 0 884 618 A1**
(43) Date de publication de la demande: **16.12.1998**
(21) Numéro de dépôt: 97202716.3
(22) Date de dépôt: 05.09.1997
(51) Int. Cl.: G02B 27/22, H04N 13/00, G02B 7/12

(54) **Visualisation en trois dimensions**

(30) Priorité: 12.06.1997 EP 97250182
(71) Demandeur: Gonçalves Cambra, Antonio, 53111 Bonn (DE)
(72) Inventeur: Gonçalves Cambra, Antonio, 53111 Bonn (DE)

(57) **Abrégé**

Je propose ici un système général de visualisation en trois dimensions adaptable au film, à la vidéo, aux dispositives et à l'ordinateur.

Au préalable (Fig 4) on aura deux prises de vues (faites par caméras (13) ou dessinées) correspondantes aux prises de vues (12) faites par les yeux humains (11).

Dans la visualisation des dites prises de vues (Fig 6), on aura besoin de lunettes à cristaux liquides (16) -- de telle façon que toute la surface de chaque lunette pourra devenir opaque (16b, Fig 6a; 16a, Fig 6b) par action d'une couche desdits cristaux liquides.

(Fig 6a) Pour apercevoir (par exemple) l'image gauche (14a), les lunettes recevront un signal (15R) par radio (15) (ou par cable), en indiquant sa nature (gauche dans cet exemple), qui rendra opaque la lunette droite (16b), (empêchant l'oeil droit de voir): l'image ne sera aperçue que par l'oeil gauche (16a); ensuite le processus se fera également pour l'image droite (Fig 6b).

Bien que les valeurs puissent augmenter à fin d'obtenir une meilleur netteté de la vision, la perception de relief sera possible avec, en principe, une fréquence de 24 images (12 "bi-images") par seconde (12 images de chaque coté), d'après les normes suivies dans le film et la vidéo.

## Description

La présente demande d'invention concerne un nouveau procédé pour la communication de l'image - un système général de visualisation en trois dimensions, adaptable au film, à la vidéo, aux diapositives et à l'ordinateur.
0. À ce jour, trois procédés peuvent créer la visualisation en trois dimensions:
01. HOLOGRAPHIE: très performant, mais (imaginons-nous dans une salle de cinéma) un spéctateur assis à droite de l'écran verra quelque chose de tout à fait différent d'un autre spéctateur assis à gauche;
02. 3D-EN-ORDINATEUR: pour ce procédé on a besoin d'un casque (dernièrement réduit à des lunettes assez grosses) dans lequel on place, devant chaque oeil, une télé miniaturisée;
03. LUNETTES-2-COULEURS: utilisé depuis longtemps, surtout dans les livres pour enfants, on n'obtient que des images monochromes (en général de couleur marron).
04. D'autres essais ont été faits depuis toujours dans le meme but, mais ne sont que des variations plus ou moins réussies de ces trois procédés. Des essais avec des lunettes pareilles à celles décrites ici ont été aussi effectués déjà, mais il y a des erreurs au niveau des prises de vue -- ce que mon procédé se propose corriger.
05. Pour mon procédé "visual-3D" l'exposé sera presenté en trois parties: la prise de vue pour l'obtention des "bi-images" (les deux images -- l'une aperçue par l'oeil gauche, l'autre aperçue par l'oeil droit) exemplifié par les jumelles (point 1.), le défilement des "bi-images" pour la visualisation (point 2.), et le fonctionnement des lunettes à cristaux liquides, avec l'exemple de la vidéo (point 3.).

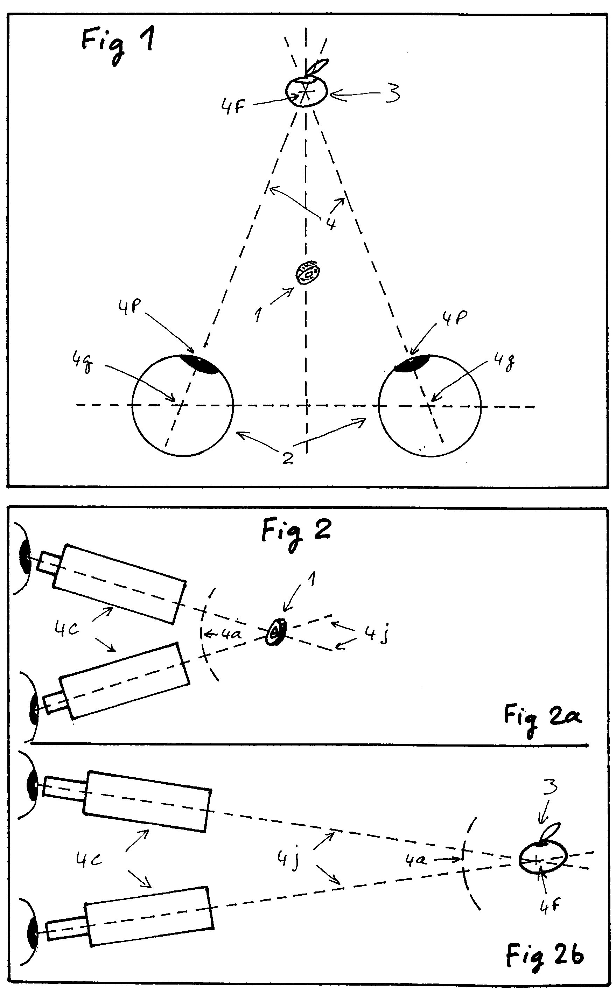

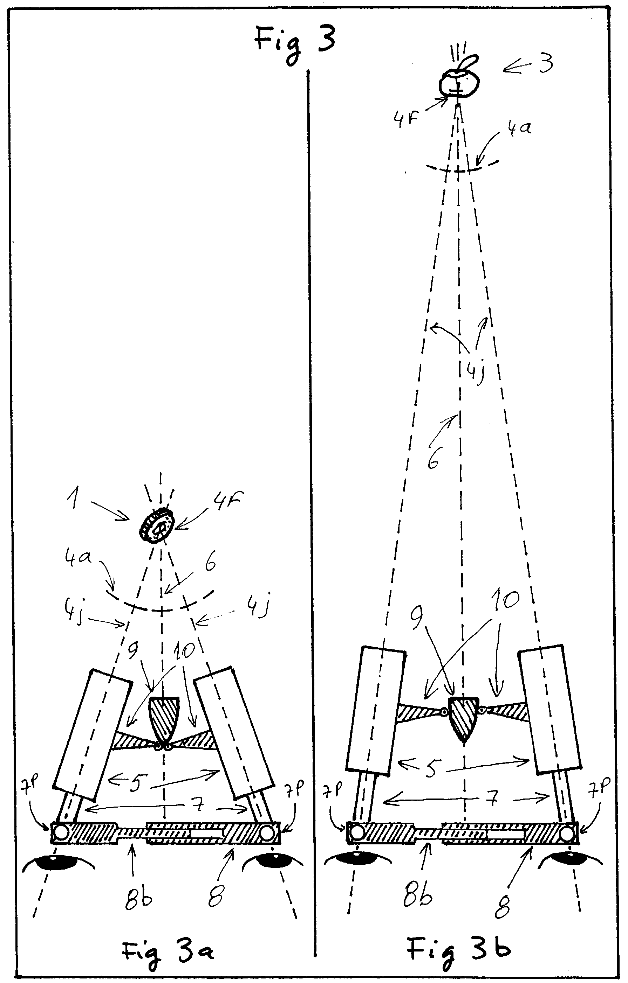

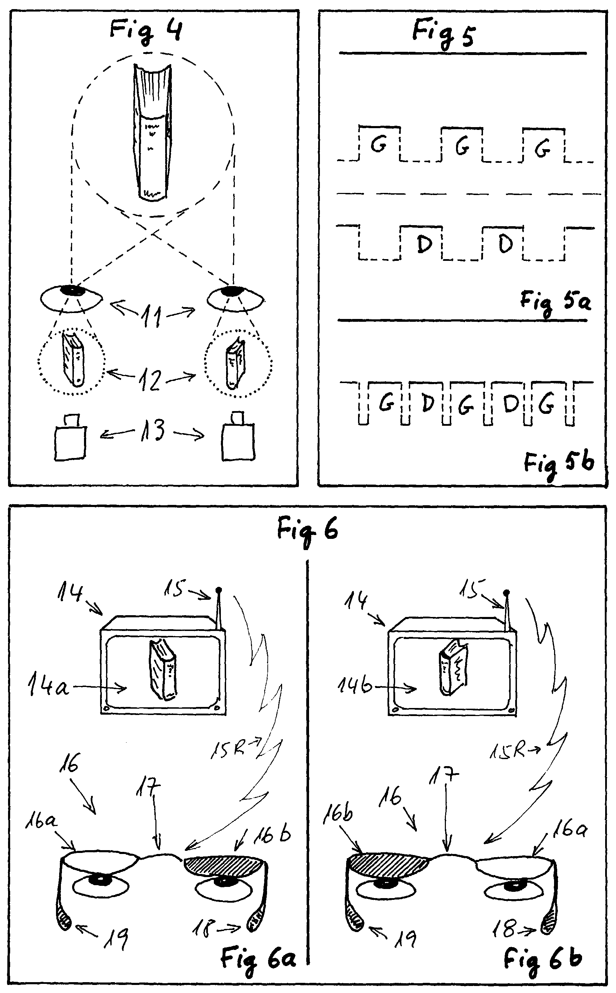

1. Lorsque nous voyons (Fig 4), chaqu'un de nos yeux (11) envoie au cerveau une image (12): c'est la différence de perspective entre les deux images qui donne l'impression de relief.
   On pourra alors placer des instruments d'óptique de prise de vues à la place des yeux (13) et obtenir des "**bi-images**" (12) qui pourront etre:
   - Cas 1:: **observées en direct** (Jumelles, microscopes, telescopes -- eventuellement avec de l'aide de fibres optiques);
   - Cas 2:: **transmises** (par moyens electromagnétiques):
   Cas 2a: sans-fils (TV par antenne)
   Cas 2b: par cable (TV par cable)
   - Cas 3:: **conservées en supports**:
   Cas 3a: mécaniques (photo, film),
   Cas 3b: electromagnétiques (vidéo-cassete),
   Cas 3c: optiques (disque optique).
11. (Fig 1) Plaçons une petite pièce de monnaie (1) devant les yeux (2), mais regardons une pomme plus éloignée: l'image que nous avons de la pièce de monnaie (1) est flou et confuse -- les images de chaqu'un des yeux se brouillent dans notre cerveau.
   La netteté est obtenue si les "**azes de vision**" des yeux (4) -- droites imaginaires passant par le centre du globe oculaire (4g) et le centre de la pupille (4P) ont leur "**foyers**" (4F) coincidants, et demeurant quelque part dans la surface de vision de l'object en observation (3).
   Dans le cas des jumelles (Fig 2), l'axe de vision (4j) coincide avec l'axe de rotation de toutes les lentilles (de l'oculaire et de l'objective).
12. Pour exposer ma technique de prise de vues pour les "bi-images", j'utiliserai justement le cas des jumelles; mais l'exposé est valable pour toute sorte d'instrument optique de prise de vues.
121. (Fig 2) On peut donc constater que les axes de vision des jumelles (4j) forment un **angle** (4a) -- que peut varier entre deux valeurs extrèmes (**maximum et minimum**), dependant de la qualité de fabrication des jumelles
   -- pouvant le minimum être nul (dans le cas ou les axes de vision (4j) soient paraleles, lorsque on regarde un object placé à une distance infinie).
122. (Fig 3) Et si les deux objectives (5) devront pouvoir s'approcher ou s'éloigner entre elles en fonction de la variation de la distance focale, les oculaires, par contre, devront etre fixes pour les cas où existe normalement la présence d'un observateur (jumelles, microscope, télescopes, prise de vues pour photo, film, vidéo), à travers un **barreau d'accouplement** (8), dans les extremités duquel tournent les oculaires (7) autour d'un **pivot d'attachement** (7P).
   Cependant, pour pouvoir s'accommoder aux différences individuelles de distance entre les yeux, la longueur du barreau d'accouplement (8) devra pouvoir varier, grosso modo entre les 5 et 10 cm, par une **cheville d'ajustage** (8b).
123. (Fig 3) Considérant comme fixe la distance entre les oculaires (7), la recherche d'une nouvelle position des foyers coincidants (4F), (par exemple, à partir du point où se trouve la pièce de monnaie (4F/1) jusqu'au point où se trouve la pomme (4F/3), provoque donc un éloignement entre les deux objectives (5) -- éloignement que devra etre function de la variation de la position des **foyers coincidents** (4F) au long d'une droite imaginaire, la "**ligne des foyers**" (6). Ces mouvements pourront etre effectuées par des moyens mécaniques et/ou électriques, menés par un dispositif representé symboliquement dans les dessins par une "**clavette de réglage**" (9), au long de laquelle glissent deux "**petites tiges**" (10) attachées aux objectives (5).
   (Les jumelles toujours utilisées ont leur axes de vision (4j) paraleles, ne permetant donc jamais une nette impression de relief -- sauf en regardant un object placé à une distance infinie...).
2. Le défilement des bi-images pour la visualisation.
   (Fig 5: "G"= projection de l'image gauche; "D"= projection de l'image droite).
21. Pour les diapositives il faut bien sur avoir un appareil avec deux projecteures -- un pour les images de gauche, et un autre pour les images de droite (Fig 5a).
22. Dans le cas de la vidéo, donc, les séquences "gauche/droite" arriveront en continu au récepteur (Fig 5b).
23. Pour le film, on peut envisager les deux solutions
   -- avec deux projecteurs en alterné (Fig 5a) ou bien un seul projecteur en continu (Fig 5b), mais la première solution apportera un gain considérable de netteté, puisqu'un des projecteurs pourra mettre l'image suivante en place, pendant que l'autre projecteur envoie son image.
24. On devra avoir, en principe, une frequence de 24 images (12 "bi-images") par seconde (12 images de chaque coté par seconde), d'après les normes suivies dans le film et la vidéo. Ces valeurs pourront néanmoins augmenter à fin d'obtenir une meilleur netteté de vision.
3. Pour ilustrer le fonctionement des lunettes à cristaux liquides, prenons donc maintenant (Fig 6) la vidéo (14), où on fera défiler en continu des séquences de "bi-images" ("14a"= image gauche, "14b"= image droite), avec une fréquence alternée de 12 images par seconde de chaque coté.
31. On aura besoin maintenant d'un mécanisme semblable à une télé-commande utilisée pour le choix des programmes de télé, mais fonctionnant à l'envers (Fig 6): c'est la vidéo (14) à travers un transmetteur (15) qui envoie des signaux-radio (15R) aux lunettes (16), celles-ci les recevant par une antenne (17) qui indique la nature de l'image observée (gauche (14a) ou droite (14b)).
32. Un récepteur/micro-processeur (18) agira en conséquence de la nature du signal-radio (15R) reçu: (Fig 6a) s'il est de l'image gauche (14a), par exemple, il rendra opaque la lunette droite (16b), (empéchant l'oeil droit de voir), ne permettant qu'à l'oeil gauche de voir l'image (16a); ensuite (Fig 6b) viendra l'image droite (14b) -- et le meme processus se répétera alors pour l'autre coté.
33. Le fonctionnement des lunettes est assuré par l'alimentation soit par cable soit par une mini-batterie (19).

## Revendications

1. Système général de visualisation en trois dimensions, pour observation directe à travers des instruments optiques de prise de vues (jumelles, microscopes, telescopes), pour transmission vidéo (sans-fils ou par cable), pour conservation en supports (mécaniques (photo, film), electromagnétiques (vidéo-cassete), ou optiques (disque optique)), et pour création d'images par dessin (fixe ou animé).

2. Dispositif (selon la revendication "1") caracterisé par l'obtention, au préalable (Fig 4), de deux images (ou "bi-image") (12), obtention faite par les caméras (13) ou créées par dessin, comme les images apercues par les yeux humains (11) -- une image étant aperçue par l'oeil gauche et une autre étant aperçue par l'oeil droit.

3. Dispositif pour l'obtention de "bi-images" (selon la revendication "2") caracterisé par (Fig 1) les axes de vision des yeux (4) -- lignes imaginaires passant par le centre du globe oculaire (4g) et par le centre de la pupille (4p) -- et (Fig 2) les axes de vision des instruments optiques de prise de vues (4j)
-- coincidant avec les axes de rotation de toutes les lentilles -- qui se croisent quelque part à la surface de vision de l'object en observation (3, Fig 1; 1 et 3, Fig 2) à la hauteur de ses respectives "foyers" (4F, "foyers coincidants").

4. Dispositif pour l'obtention de "bi-images" (Fig 2), (selon les revendications "2" et "3"), caracterisé par l'existence de deux valeurs extrèmes pour l'angle "4a" formé par les axes de vision (4j) des deux composants (4c) d'un instrument optique de prise de vues -- un minimum et un maximum (valeurs dependants de la qualité de fabrication), et dont le minimum peut etre nul (cas où on observe un object placé à une distance infinie, étant alors les deux axes de vision (4j) paralèles entre soi.

5. Dispositif pour l'obtention de "bi-images" (Fig 3) (selon la revendication "4"), caracterisé par l'existence d'un barreau d'accouplement (8), dans les extremités duquel tournent les oculaires (7) autour d'un pivot d'attachement (7P).

6. Dispositif pour l'obtention de "bi-images" (Fig 3) (selon la revendication "5"), caracterisé par le barreau d'accouplement (8) normalement fixe pendant les observations, mais que devra pouvoir faire varier la distance entre les oculaires (7) à travers une "cheville d'ajustage" (grosso modo entre 5 et 10 cm), pour pouvoir s'accommoder aux différences individuelles de la distance entre les yeux.

7. Dispositif pour l'obtention de "bi-images" (Fig 3) (selon les revendications "3" et "4"), caracterisé par la variation de position des "foyers coincidants" (4F) au long d'une droite imaginaire, la "ligne des foyers" (6), (coincidant avec la bissectrice de l'angle "4a") variation que provoque un rapprochement ou un éloignement des deux objectives (tournant, avec l'oculaire, autour du "pivot d'attachement" (7P)), rapprochement et éloignement effectués par moyens mécaniques et/ou electriques, menés par un disposif representé symboliquement dans les dessins par une "clavette de reglage" (9), au long de laquelle glissent deux "petites tiges" (10) attachées aux objectives (5).

8. Dispositif pour observation directe avec des instruments optiques de prises de vues (jumelles, microscopes, telescopes) en "bi-images", (selon la revendication "2"), tenant en compte l'existence d'un barreau d'accouplement (8), où tournent les deux oculaires autour des "pivots d'attachement" (7P), (selon la revendication "5"), pouvant ledit barreau d'accouplement (8) s'accommoder aux différences individuelles de la distance entre les yeux à travers une "cheville d'ajustage" (8a), (selon la revendication "6"), tandis que les objectives pourront s'approcher ou s'éloigner (en function de la position au long de la "ligne des foyers"), appuiées sur des "petites tiges" (10) glissant sur une "clavette de réglage" (9) (selon la revendication "7").

9. Dispositif pour la visualisation en trois dimensions (selon la revendication "1") pour la visualisation de "bi-images" (selon la revendication "2"), conservées sur supports mécaniques (photo, film), par:
-- une paire de projecteurs, l'un projectant les images gauches et l'autre projectant les images droites, de façon alternée (Fig 5: "G"=gauche, "D"=droit) (Fig 5a).

10. Dispositif pour la visualisation en trois dimensions (selon la revendication "1") pour la visualisation de "bi-images" (selon la revendication "2"), arrivées en direct par transmission electromagnétique (par cable ou sans-fils), ou prises d'enregistrements électromagnétiques ou optiques, caracterisé par:
-- un défilement alterné de l'image gauche et de l'image droite de chaque bi-image (Fig 5b), sur un appareil vidéo.

11. Dispositif pour la visualisation en trois dimensions (selon la revendication "1"), à travers des "bi-images" (selon la revendication "2"), caracterisé par l'observation desdites "bi-images" (selon les revendications "9" et "10") avec, en principe, une frequénce de 24 images (12 "bi-images") par seconde (12 images de chaque coté par seconde), d'après les normes suivies dans le film et la vidéo. Ces valeurs pourront néanmoins augmenter à fin d'obtenir une meilleur netteté de vision.

12. Dispositif pour la visualisation en trois dimensions (selon la revendication "1") caracterisé par l'observation de "bi-images" (selon la revendication "2") manipulées par des moyens mécaniques (selon la revendication "9") ou bien electromagnétiques ou optiques (selon la revendication "10") avec une frequénce de 24 images par seconde ou plus (selon la revendication "11"), à travers des lunettes "a cristaux liquides",
-- de telle façon que toute la surface de chaque lunette pourra devenir opaque par action d'une couche desdits cristaux liquides, comme on le fait pour les chiffres et les lettres des montres, calculatrices, téléphones, etc..

13. Dispositif pour la visualisation en trois dimensions (selon la revendication "1") avec des lunettes à cristaux liquides (selon la revendication "12" de telle facon que (Fig 6a):
-- à l'observation d'une des images (la gauche, par exemple (14a), d'une bi-image (selon la revendication "2"),
-- soit associé en simultané un signal-radio (15R) par un transmetteur (15), indiquant sa nature (gauche ou droite);
-- (si non par cable,) une antenne (17) dans les lunettes (16) captera le signal-radio (15R), permettant à un récepteur/micro-processeur (18) d'agir en conséquence rendant opaque (dans l'exemple pris) la lunette droite (16b) (empêchant ainsi l'oeil droit de voir), permettant seulement à l'oeil gauche (16a) de voir l'image;
-- le processus se répétera ensuite pour l'observation de l'image droite (14b, Fig 6b).

14. Dispositif pour la visualisation en trois dimensions (selon la revendication "1") avec des lunettes à cristaux liquides (selon les revendications "12" et "13"), dont le fonctionnement, si non par cable, est assuré par l'alimentation d'une mini-batterie (19).
